# EUROPÄISCHE PATENTSCHRIFT

(11) **EP 4 257 839 B1**
(45) Veröffentlichungstag und Bekanntmachung des Hinweises auf die Patenterteilung: **05.03.2025**
(21) Anmeldenummer: 22166944.3
(22) Anmeldetag: 06.04.2022
(51) Int. Cl.: F16D 55/226, F16D 55/2265, F16D 55/227

(54) **BREMSVORRICHTUNG UND FAHRZEUG, INSBESONDERE EIN NUTZFARZEUG**
BRAKING DEVICE AND VEHICLE, IN PARTICULAR A UTILITY VEHICLE
DISPOSITIF DE FREIN ET VÉHICULE, EN PARTICULIER VÉHICULE UTILITAIRE

(43) Veröffentlichungstag der Anmeldung: 11.10.2023
(73) Patentinhaber: ZF CV Systems Europe BV, 1170 Brüssel (BE)
(72) Erfinder: Jungmann, Hans-Christian, 69517 Gorxheimertal (DE)
(74) Vertreter: Ohlendorf, Henrike

(56) Entgegenhaltungen:
- WO-A1-2009/059762
- WO-A1-90/10162
- DE-A1- 102007 001 213
- DE-A1- 102015 114 437
- DE-A1- 3 237 515
- US-A- 4 194 597
- US-A- 4 458 790

## Beschreibung

Die Erfindung betrifft eine Bremsvorrichtung für ein Fahrzeug, insbesondere für ein Nutzfahrzeug. Die Erfindung betrifft auch ein Fahrzeug, insbesondere ein Nutzfahrzeug.

Aus dem Stand der Technik sind Bremsvorrichtungen bekannt. Eine bekannte Bremsvorrichtung umfasst einen Bremssattel, einen Bremsträger und eine Bolzenführung mit einem sich entlang einer Achse erstreckenden Bolzen. Die Bolzenführung ist dazu eingerichtet und angeordnet, den Bremssattel entlang der Achse relativ zum Bremsträger verschiebbar zu lagern. Die Bolzenführung weist eine Hülse auf. Solche Hülse können beispielsweise aus Messing gefertigt sein und/oder ein Metall-Polymer umfassen, beispielsweise ein mit einem Polymer beschichtetes Metall.

DE 10 2004 029 462 A1 offenbart eine Schwimmsattel-Scheibenbremse mit zwei Bolzenführungen. Eine zweite Bolzenführung weist einen mehrteiligen Führungsbolzen auf, mit einem Bolzen, einer den Bolzen umgebenden elastischen Hülse und mit einer die elastische Hülse umgebenden Gleithülse. Durch die elastische Hülse können Fertigungstoleranzen ausgeglichen werden, so dass ein gegenseitiges Verkanten der beiden Bolzenführungen verhindert wird. Zur gezielten Einstellung der elastischen Wirkung ist die elastische Hülse an der Innen- und/oder Außenseite mit einer geeigneten Profilierung versehen.

DE 3413737 A1 offenbart eine Teilbelag-Scheibenbremse mit einer Hülse mit einem oder mehreren Längsschlitzen, um bei Verwendung eines vergleichsweise steifen, hohe Kräfte aufnehmenden Werkstoffs ein leichtes Einknöpfen der Hülse in eine Bohrung eines Bremssattels zu gewährleisten. DE 3443550 A1 offenbart auch eine Teilbelag-Scheibenbremse mit einer Hülse.

DE 10 2013 005 445 A1 offenbart eine Scheibenbremse für ein Nutzfahrzeug. Dabei ist eine Gleitbuchse eines Loslagers als ein bereichsweise radial verformbares, einstückiges Federelement ausgebildet, das verschiebegesichert in einem Bremssattel gehalten ist und sich an einem Führungsholm diesen mantelartig umhüllend abstützt.

Die US4194597A1 offenbart eine Scheibenbremse mit einer im Bremssattel angeordneten Bolzenführung zur Aufnahme zwei am Bremsträger angeordneten Bolzen. Die Bolzenführung umfasst ein im inneren der Bolzenführung angeordnetes zylinderförmiges elastisches Dämpfungselement, das sich axial entlang der Bolzenführung erstreckt. Das Dämpfungselement ist zwischen dem Bremssattel und einer den Bolzen ummantelnden Buchse angeordnet.

Die DE102007001213A1 offenbart eine Minimierung des Restschleifmoments nach einem Zuspannvorgang der Scheibenbremse durch einen verschleißbedingten Ausgleich des Lüftspiels erreicht wird das Ziel durch das Halten der Buchse am Bolzen während eines bremsbedingten Verschiebens.

Die WO9010162A1 offenbart eine Scheibenbremse mit einer Bolzenführung, bei der zur Schwingungsdämpfung das Loslager eine elastische Buchse aufweist, die als Dämpfungselement zwischen Gehäuse und Radaufhängung angeordnet ist. Verbesserungswürdig sind jedoch Dämpfungseigenschaften, also die Eigenschaft mechanische Schwingungen und/oder Vibrationen zu Dämpfen. Insbesondere bei der Anwendung in pneumatischen Bremsvorrichtungen mit strengen Anforderungen an die Geräuschemission, beispielsweise bei der Anwendung in einem Bus, sind verbesserte Dämpfungseigenschaften vonnöten.

Der Erfindung liegt daher die Aufgabe zugrunde, eine zuverlässige und effektive Dämpfung kosteneffizient zu ermöglichen.

Die Aufgabe wird durch eine Bremsvorrichtung nach Anspruch 1 sowie ein Fahrzeug, insbesondere Nutzfahrzeug, nach dem nebengeordneten Anspruch. Die Unteransprüche geben bevorzugte Weiterbildungen der Erfindung an.

Erfindungsgemäß wird Bremsvorrichtung für ein Fahrzeug, insbesondere für ein Nutzfahrzeug, bereitgestellt. Die Bremsvorrichtung umfasst einen Bremssattel, einen Bremsträger und eine Bolzenführung mit einem sich entlang einer Achse erstreckenden Bolzen, wobei die Bolzenführung dazu eingerichtet und angeordnet ist, den Bremssattel entlang der Achse relativ zum Bremsträger verschiebbar zu lagern, wobei die Bolzenführung eine Hülse mit einer Innenfläche und mit einem wenigstens abschnittweise hohlzylinderförmigen Abschnitt aufweist. Die Hülse weist an der Innenfläche eine Mehrzahl umfänglich verlaufender Ausnehmungen auf, wobei die Bolzenführung je ein in den Ausnehmungen angeordnetes Dämpfungselement aufweist. Bezogen auf die Zylinderachse, ragen die Dämpfungselemente aus den Ausnehmungen radial nach innen in Richtung des Bolzens. Damit ist die Innenfläche der Hülse nicht direkt an dem Bolzen abgestützt.

Die Erfindung hat erkannt, dass Hülsen verwendet werden können, die umfänglich verlaufende Ausnehmungen aufweisen, um zuverlässig und kosteneffektiv eine Geräuschdämpfung zu erzielen.

Die Hülse ist um den Bolzen angeordnet. Damit stützt sich die Hülse mit der Innenfläche an dem Bolzen ab. Um den Bolzen ist die Hülse derart angeordnet, dass sich die Hülse an dem zylindrischen Abschnitt abstützt. Dadurch können Vibrationen und/oder mechanische Schwingungen zwischen dem Bolzen und der Hülse übertragen werden, die erfindungsgemäß gedämpft werden. Dafür weist die Hülse umfänglich verlaufende Ausnehmungen auf. Die Ausnehmungen sind umfänglich verlaufende Vertiefungen in dem ansonsten wenigstens abschnittsweise hohlzylinderförmigen Abschnitt. Durch die umfängliche Anordnung der Ausnehmungen wird durch veränderte Resonanzeigenschaften eine verbesserte Dämpfungseigenschaft erzielt.

Vorzugsweise verläuft jede Ausnehmung vollumfänglich. Jede Ausnehmung verläuft somit entlang der Umfangsrichtung um die gesamte Innenfläche des wenigstens abschnittsweise hohlzylinderförmigen Abschnitts. Zusätzlich oder alternativ kann jede Ausnehmung durch eine Stoßfuge unterbrochen sein. Damit ist es möglich, dass die Hülse kosteneffektiv aus einem Blech bzw. einem Bandmaterial hergestellt wird. Jede Ausnehmung ist dabei derart angeordnet, dass die Ausnehmung abgesehen von der Stoßfuge vollumfänglich in Umfangsrichtung verläuft. In dieser Ausführungsform ist es möglich, dass ein Dämpfungselement besonders effektiv in der Ausnehmung anordenbar ist.

Vorzugsweise varlaufen die Ausnehmungen rotationssymmetrisch um eine Zylinderachse der Hülse. Die Hülse definiert durch den wenigstens hohlzylinderförmigen Abschnitt die Zylinderachse. Durch die Rotationssymmetrie jeder Ausnehmung ist eine besonders effektive Fertigung der Hülse möglich. Besonders vorteilhaft ist in dieser Ausführungsform ein Dämpfungselement in der Ausnehmung anordenbar, da durch die Rotationssymmetrie eine radiale Ausrichtung des Dämpfungselements entbehrlich ist.

Vorzugsweise weist die Bolzenführung ein in jeder Ausnehmung angeordnetes Dämpfungselement auf. Das Dämpfungselement ist in der Ausnehmung angeordnet. Damit kann das Dämpfungselement bewirken, dass die Innenfläche der Hülse nicht direkt an dem Bolzen abgestützt ist, sondern dass die Hülse an der Innenfläche der Hülse mittelbar über das Dämpfungselement an dem Bolzen abgestützt ist. Damit werden mechanische Schwingungen zwischen dem Bolzen und der Hülse über das Dämpfungselement übertragen und werden dabei durch das Dämpfungselement gedämpft.

Vorzugsweise ist das Dämpfungselement ringförmig. Damit ist eine effektive Anordnung des Dämpfungselements in der Ausnehmung und somit um den Bolzen möglich.

Vorzugsweise ist das Dämpfungselement o-ringförmig. **In** dieser Ausführungsform ist das Dämpfungselement vollumfänglich um den Bolzen in der Ausnehmung angeordnet. Dies führt zu einer rotationssymmetrischen Dämpfung und einer besonders einfachen Anordnung des Dämpfungselements innerhalb der Ausnehmung. In anderen Ausführungsformen kann das Dämpfungselement auch andere Formen aufweisen, beispielsweise die Form eines c-Rings, also eines offenen Rings.

Vorzugsweise weisen mehrere der Ausnehmungen eine jeweils gleiche Breite und Tiefe auf. Damit ist eine besonders effektive Herstellung der Ausnehmungen in der Hülse möglich, da jede der Ausnehmungen die gleiche Geometrie aufweist. Alternativ oder zusätzlich weisen mehrere der Ausnehmungen jeweils eine zueinander verschiedene Breite und/oder eine zueinander verschiedene Tiefe auf. Damit ist eine Abstimmung der Dämpfungseigenschaften anhand der Geometrien der Ausnehmungen möglich.

Vorzugsweise weist die Bolzenführung mehrere in jeweils einer Ausnehmung angeordnete Dämpfungselemente auf, wobei mehrere der Dämpfungselemente eine gleiche Abmessung aufweisen. Damit ist eine effektive Verbesserung der Dämpfungseigenschaften möglich, wobei eine besonders effektive und einfache Herstellung gewährleistet ist, da die Dämpfungselemente vertauschbar sind. Alternativ oder zusätzlich weist die Bolzenführung mehrere jeweils eine Ausnehmung angeordnete Dämpfungselement auf, wobei mehrere der Dämpfungselement der eine zueinander verschiedene Abmessung aufweisen. Damit ist eine gezielte Abstimmung der Dämpfungseigenschaften möglich.

Mit anderen Worten kann eine Ausführungsform in nicht beschränkender Weise wie folgt angegeben werden: Im Stand der Technik sind Bolzenführungen von pneumatischen Scheibenbremsen durch eine Hülse aus Messing oder Metall-Polymer bekannt. Ein Nachteil sind die geringen Dämpfungseigenschaften, insbesondere für pneumatische Scheibenbremsen mit strengen Lärmemissionsanfordungen, beispielsweise im Bus-Segment. Um diesen Nachteil kosteneffektiv zu überwinden, wird vorgeschlagen, eine Standardhülse vorzusehen, in der radiale Ausnehmungen vorgesehen sind, in denen ein Dämpfungselement anordenbar ist. Im Idealfall ist das Dämpfungselement ein O-Ring. Außerdem können mehrere O-Ringe vorgesehen sein, um einen höheren Dämpfungsfaktor zu erzielen, oder auch verschiedene Größen der O-Ringe können verwendet werden, um die Dämpfungseigenschaften der Dämpfungselemente positiv zu beeinflussen. Ein Hauptvorteil ist die Verwendbarkeit von Standardkomponenten, womit spezifische und somit kostenaufwändige Dämpfungselemente vermeidbar sind.

Gemäß einem Aspekt der Erfindung wird ein Fahrzeug, insbesondere ein Nutzfahrzeug bereitgestellt. Das Fahrzeug, insbesondere Nutzfahrzeug, umfasst eine Bremsvorrichtung gemäß der Erfindung. Vorzugsweise umfasst die Bremsvorrichtung ein oben als vorteilhaft und/oder optional beschriebenen Merkmal, um einen damit verbundenen technischen Effekt zu erzielen.

Weitere Vorteile und Merkmale der Erfindung sowie deren technische Effekte ergeben sich aus den Figuren und der Beschreibung der in den Figuren gezeigten bevorzugten Ausführungsformen. Dabei zeigen
Fig. 1 einen Schnitt durch eine Bremsvorrichtung gemäß einer Ausführungsform der Erfindung;
Fig. 2 eine perspektivische Ansicht einer Hülse einer Bremsvorrichtung gemäß einer Ausführungsform der Erfindung;
Fig. 3 eine schematische Darstellung eines Schnitts durch eine Hülse einer Bremsvorrichtung gemäß einer Ausführungsform der Erfindung; und
Fig. 4 eine schematische Darstellung eines Fahrzeugs, insbesondere Nutzfahrzeugs, gemäß einer Ausführungsform der Erfindung.

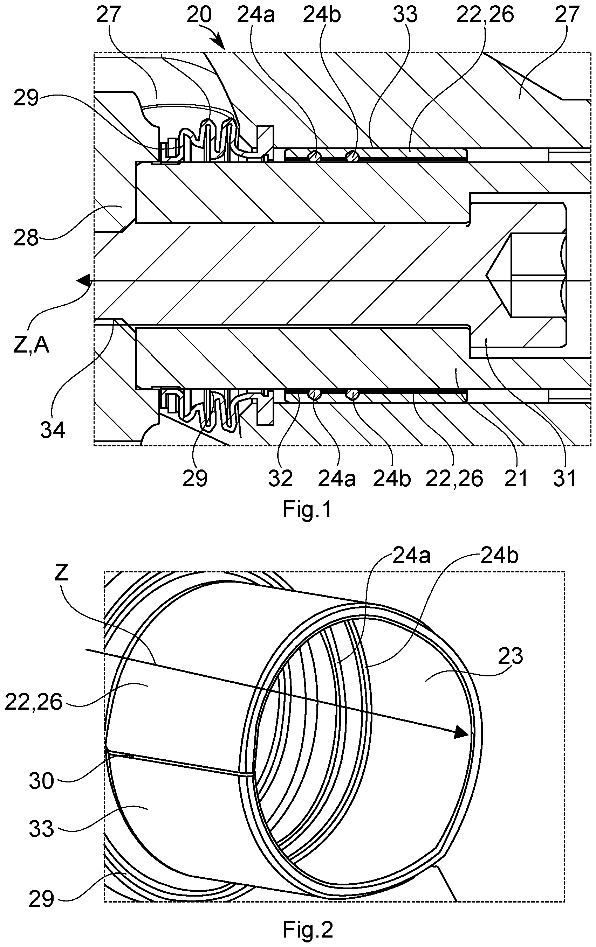

Figur 1 zeigt einen Schnitt durch eine Bremsvorrichtung 10 gemäß einer Ausführungsform der Erfindung;

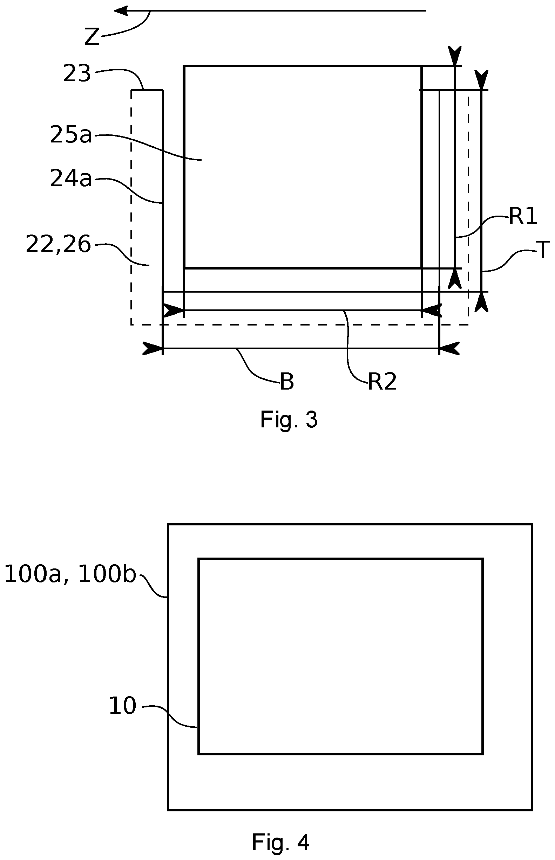

Die Bremsvorrichtung 10 ist zum Bremsen eines Fahrzeug 100a, insbesondere Nutzfahrzeugs 100b eingerichtet. Ein derartiges Fahrzeug 100a, insbesondere Nutzfahrzeug 100b, ist mit Bezug zu Figur 4 beschrieben. Das Fahrzeug 100a, insbesondere Nutzfahrzeug 100b, wird im Folgenden mit Fahrzeug 100a, 100b bezeichnet.

Wie in Figur 1 gezeigt umfasst die Bremsvorrichtung 10 einen Bremsträger 28, eine Bolzenführung 20 und einen Bremssattel 27. Der Bremssattel 27 ist beispielsweise ein Festsattel, ein Schwimmsattel oder ein Pendelsattel. Der Bremssattel 27 ist dazu eingerichtet, Bremsbeläge über einer Bremsscheibe zu zuspannen (nicht gezeigt). Dafür weist die Bolzenführung 20 einen sich entlang einer Achse A erstreckenden Bolzen 21 auf. Der Bolzen 21 weist eine zylindrische Außenfläche 32 auf. Der Bolzen 21 ist im Wesentlichen hohlzylinderförmig und ist mit einem innerhalb des Bolzens 21 angeordneten Spannelement 31 mit gegenüber den Bremsträger 28 spannbar.

Die Bolzenführung 20 ist dazu eingerichtet und angeordnet, den Bremssattel 27 entlang der Achse A relativ zum Bremsträger 28 verschiebbar zu lagern. Dafür ist der Bolzern 21 wenigstens teilweise in einer Bohrung 34 verschiebbar angeordnet. Die Bohrung 34 ist insbesondere ein Sackloch und/oder eine Durchgangsöffnung in dem Bremssattel 27. Bei der relativen Bewegung zwischen den Bremssattel 27 und dem Bremsträger 28 entstehen Vibrationen bzw. mechanische Schwingungen, die die Emission von Geräuschen implizieren kann.

Die Bolzenführung 20 weist eine Hülse 22 beziehungsweise Lagerbuchse mit einer Innenfläche 23 (siehe Figur 2) und mit einem wenigstens abschnittweise hohlzylinderförmigen Abschnitt 26 auf. Der hohlzylinderförmige Abschnitt 26 der Hülse 22 definiert eine Zylinderachse Z. Die wenigstens abschnittweise hohlzylinderförmige Form des Abschnitts 26 der Hülse 22 definiert eine Umfangsrichtung. Entlang der Zylinderachse Z erstreckt sich der Abschnitt 26 und senkrecht zu der Zylinderachse Z verläuft die Umfangsrichtung. Die Zylinderachse Z ist entlang der Achse A ausgerichtet, entlang sich der Bolzen 21 erstreckt und entlang derer der Bremssattel 27und der Bremsträger 28 relativ zueinander verschiebbar gelagert sind. Die Hülse 22 weist eine zylindrische Außenfläche 33 auf. Damit sind zur Führung des Bolzens 21 die Bohrung 34 und die Hülse 22 beziehungsweise Lagerbuchse vorgesehen, die als Führungssystem für den Bolzen 21 angeordnet sind.

Die Hülse 22 ist aus einem Metall, beispielsweise Messing, um vorteilhafte Gleiteigenschaften zu erzielen, oder aus demselben Grund aus Stahl mit einer Kunststoffbeschichtung, beispielsweise PTFE. Die Hülse 22 ist aus einem Bandmaterial hergestellt und weist daher eine Stoßfuge 22 auf (siehe Figur 2). In einer anderen Ausführungsformen kann die Hülse 22 auch aus Kunststoff sein.

Wie in Figur 1 gezeigt, ist die Hülse 22 um den Bolzen 21 angeordnet. Die Hülse 22 ist mit der Innenfläche 23 der Hülse 22 an der Außenfläche 32 des Bolzens 21 abgestützt. Die Hülse 22 und der Bolzen 21 sind koaxial zueinander angeordnet. Entlang der Zylinderachse Z bzw. entlang der Achse A weist der Bolzen 21 eine größere Ausdehnung als die Hülse 22 auf. Die Hülse 22 ist in einem dem Bremsträger 28 nahen Abschnitt des Bolzens 21 angeordnet. Zwischen der Hülse 22 und dem Bremsträger 28 ist eine Bolzendichtung 29 angeordnet. Die Bolzendichtung 29 ist aus einem elastischen Material, beispielsweise einem Kunststoff, und weist ein wellenartiges Profil auf.

Die Hülse 22 weist an der Innenfläche 23 in dem wenigstens abschnittweise hohlzylinderförmigen Abschnitt 26 zwei umfänglich verlaufende Ausnehmung 24a, 24b auf. D.h. die Hülse 22 weist an der Innenfläche 23 eine Mehrzahl umfänglich verlaufender Ausnehmungen 24a, 24b auf. Die Ausnehmungen 24a, 24b erstrecken sich radial von der Innenfläche 23 in die Hülse 22 hinein.

Jede der Ausnehmungen 24a, 24b verläuft rotationssymmetrisch um die Zylinderachse Z der Hülse 22, siehe auch Figur 2. Die Umfangsrichtung ist senkrecht zu der Zylinderachse Z angeordnet. Damit sind die Ausnehmung 24a, 24b senkrecht zu der Zylinderachse Z verlaufende Ausnehmungen.

Wie in Figur 1 gezeigt weist die Bolzenführung 20 in jeder der Ausnehmung 24a, 24b ein darin angeordnetes Dämpfungselement 25a, 25b auf. Jedes der Dämpfungselement der 25a, 25b ist ringförmig, insbesondere o-ringförmig. Die Dämpfungselemente 25a, 25b sind in den Ausnehmungen 24a, 24b derart angeordnet, dass die Dämpfungselemente 25a, 25b aus den Ausnehmungen 24a, 24b hervorragen. Bezogen auf die Zylinderachse Z, ragen die Dämpfungselemente 25a, 25b aus den Ausnehmungen 24a, 24b radial nach innen in Richtung des Bolzens 21. Damit ist die Innenfläche 23 der Hülse 22 nicht direkt an dem Bolzen 21 abgestützt ist. Die Hülse 22 ist an der Innenfläche 23 der Hülse 22 mittelbar über die Dämpfungselemente 25a, 25b an dem Bolzen 21 abgestützt. Damit werden mechanische Schwingungen zwischen dem Bolzen 21 und der Hülse 22 über die Dämpfungselement 25a, 25b übertragen und werden dadurch gedämpft.

Die Ausnehmungen 24a, 24b weisen eine jeweils gleiche Breite B und Tiefe T auf (zur Definition der Breite B und Tiefe T, siehe Figur 3). Die Dämpfungselemente 25a, 25b weisen jeweils gleiche Abmessung R1, R2 auf (zur Definition der Abmessungen R1, R2, siehe Figur 3). In einer anderen, nicht gezeigten Ausführungsform weisen die Ausnehmungen 24a, 24b eine zueinander verschiedene Breite B und/oder eine zueinander verschiedene Tiefe T auf; und/oder die Dämpfungselemente 25a, 25b weisen eine zueinander verschiedene Abmessung R1, R2 auf.

Figur 2 zeigt eine perspektivische Ansicht einer Hülse 22 einer Bremsvorrichtung 10 gemäß einer Ausführungsform der Erfindung. Die Hülse 22 wird im Folgenden unter Bezugnahme zu Figur 1 beschrieben. In der in Figur 2 dargestellten Ausführungsformen ist der Bolzen 21 nicht dargestellt.

Wie in Figur 2 zu sehen ist, verlaufen die Ausnehmungen 24a, 24b im Wesentlichen vollumfänglich an der Innenfläche 23 der Hülse. D.h., jede der Ausnehmungen 24a, 24b ist durch die Stoßfuge 30 unterbrochen. Die Ausnehmungen 24a, 24b verlaufen senkrecht zur Zylinderachse Z.

In einer nicht gezeigten Ausführungsform kann die Hülse 22 auch mehr als zwei Ausnehmungen 24a, 24b aufweisen. Die Abstände zwischen zwei benachbarten Ausnehmungen 24a, 24b sind entsprechend der zu erzielenden Dämpfungseigenschaften anpassbar. Beispielsweise können drei Ausnehmungen 24a, 24b äquidistant oder mit paarweise verschiedenen Abständen zueinander in der Hülse 22 vorgesehen sein.

Figur 3 zeigt eine schematische Darstellung eines Schnitts durch eine Hülse 22 einer Bremsvorrichtung 11 gemäß einer Ausführungsform der Erfindung. Die Hülse 22 wird unter Bezugnahme zu Figuren 1 und 2 beschrieben.

Figur 3 beschreibt die Geometrie einer der Ausnehmungen 24a, 24b. Exemplarisch ist in Figur 3 die Ausnehmung 24a mit den Dämpfungselement 25a gezeigt. Das mit Bezug zu Figur 3 für die Ausnehmung 24a und das Dämpfungselement 25a gezeigte und beschriebene kann gleichfalls für die andere Ausnehmung 24b und das andere Dämpfungselement 25b gelten.

Die Ausnehmung 24a ist in der Innenfläche 23 der Hülse 22 vorgesehen. Die Ausnehmung 24a ist eine Vertiefung, die sich senkrecht zur Zylinderachse Z in die Innenfläche 23 der Hülse 22 erstreckt. Die Ausnehmung 24a weist eine Tiefe T auf, wobei die Tiefe T die Ausdehnung der Ausnehmung 24a senkrecht zur Zylinderachse Z ist. Die Ausnehmung 24a weist eine Breite B auf, wobei die Breite B die Ausdehnung der Ausnehmung 24a entlang der Zylinderachse Z ist.

In der Ausnehmung 24a ist das Dämpfungselement 25a angeordnet. Das Dämpfungselement 25a ist beispielsweise ringförmig. Die Ringform des Dämpfungselement 25a ist exemplarisch durch zwei Abmessungen R1, R2 beschrieben. Das Dämpfungselement 25a weist eine erste Abmessung R1 auf, wobei die erste Abmessung R1 die Ausdehnung des Dämpfungselements 25a senkrecht zur Zylinderachse Z ist. Das Dämpfungselement 25a weist eine Abmessung R2 auf, wobei die zweite Abmessung R2 die Ausdehnung des Dämpfungselements 25a entlang der Zylinderachse Z ist.

Die erste Abmessung R1 des Dämpfungselements 25a ist größer als die Tiefe T der Ausnehmung 24a. Damit ragt das Dämpfungselement 25a aus der Ausnehmung 24a heraus. Damit kann der Bolzen 21 an dem Dämpfungselement 25a abgestützt werden. Die zweite Abmessung R2 das Dämpfungselement 25a ist auf die Breite B der Ausnehmung 24a derart abgestimmt, dass das Dämpfungselement 25a zuverlässig in der Ausnehmung 24a gehaltert ist.

Figur 4 zeigt eine schematische Darstellung eines Fahrzeugs 100a, insbesondere Nutzfahrzeugs 100b, gemäß einer Ausführungsform der Erfindung.

Das Fahrzeug 100a, insbesondere Nutzfahrzeug 100b, umfasst eine Bremsvorrichtung 10 wie mit Bezug zu Figuren 1 bis 3 beschrieben. Die Bremsvorrichtungen 10 genügt Anforderungen an Geräuschemission, beispielsweise bei der Anwendung in einem Bus. Die Bremsvorrichtung 10 ist optional eine pneumatische Bremsvorrichtung 10. **In** anderen Ausführungsformen ist die Bremsvorrichtung 10 ein hydraulische, eine mechanisch betätigbare und/oder eine elektrisch aktuierbare Bremsvorrichtung 10.

### Bezugszeichen (Teil der Beschreibung)

- 10: Bremsvorrichtung
- 20: Bolzenführung
- 21: Bolzen
- 22: Hülse
- 23: Innenfläche
- 24a: Ausnehmung
- 24b: Ausnehmung
- 25a: Dämpfungselement
- 25b: Dämpfungselement
- 26: hohlzylinderförmiger Abschnitt
- 27: Bremssattel
- 28: Bremsenträger
- 29: Bolzendichtung
- 30: Stoßfuge
- 31: Spannelement
- 32: Außenfläche des Bolzens
- 33: Außenfläche der Hülse
- 34: Bohrung

- 100a: Fahrzeug
- 100b: Nutzfahrzeug

- A: Achse
- B: Breite
- R1: erste Abmessung
- R2: zweite Abmessung
- T: Tiefe
- Z: Zylinderachse

## Patentansprüche

1. Bremsvorrichtung (10) für ein Fahrzeug (100a), insbesondere für ein Nutzfahrzeug (100b), umfassend
- einen Bremssattel (27), einen Bremsträger (28) und eine Bolzenführung (20) mit einem sich entlang einer Achse (A) erstreckenden Bolzen (21), wobei
- die Bolzenführung (20) dazu eingerichtet und angeordnet ist, den Bremssattel (27) entlang der Achse (A) relativ zum Bremsträger (28) verschiebbar zu lagern, wobei
- die Bolzenführung (20) eine Hülse (22) mit einer Innenfläche (23) und mit einem wenigstens abschnittweise hohlzylinderförmigen Abschnitt (26) aufweist, wobei
- die Hülse (22) an der Innenfläche (23) eine Mehrzahl umfänglich verlaufender Ausnehmungen (24a, 24b) aufweist, **dadurch gekennzeichnet, dass**
- die Bolzenführung (20) je ein in den Ausnehmungen (24a, 24b) angeordnetes Dämpfungselement (25a, 25b) aufweist und wobei die Dämpfungselemente (25, 25a) aus den Ausnehmungen (24a, 24b), bezogen auf die Zylinderachse Z, radial nach innen in Richtung des Bolzen 21 ragen.

2. Bremsvorrichtung nach Anspruch 1, wobei
- die Ausnehmung (24a, 24b) vollumfänglich verläuft und/oder die Ausnehmung (24a, 24b) durch eine Stoßfuge (30) unterbrochen ist.

3. Bremsvorrichtung nach einem der vorherigen Ansprüche, wobei
- die Ausnehmung (24a, 24b) rotationssymmetrisch um eine Zylinderachse (Z) der Hülse (22) verläuft.

4. Bremsvorrichtung nach Anspruch 1, wobei
- das Dämpfungselement (25a, 25b) ringförmig ist.

5. Bremsvorrichtung nach Anspruch 4, wobei
- das Dämpfungselement (25a, 25b) o-ringförmig ist.

6. Bremsvorrichtung nach Anspruch 1 oder 2 oder 3, wobei
- mehrere der Ausnehmungen (24a, 24b) eine jeweils gleiche Breite (B) und Tiefe (T), eine zueinander verschiedene Breite (B) und/oder eine zueinander verschiedene Tiefe (T) aufweisen.

7. Bremsvorrichtung nach Anspruch 1, wobei
- die Bolzenführung (20) mehrere in jeweils einer Ausnehmung (24a, 24b) angeordnete Dämpfungselemente (25a, 25b) aufweist, und wobei
- mehrere der Dämpfungselemente (25a, 25b) eine gleiche Abmessung (R1, R2) und/oder eine zueinander verschiedene Abmessung (R1, R2) aufweisen.

8. Fahrzeug (100a), insbesondere ein Nutzfahrzeug (100b), umfassend eine Bremsvorrichtung (10) nach einem der vorangehenden Ansprüche.

## Claims

1. Braking device (10) for a vehicle (100a), in particular for a commercial vehicle (100b), comprising
- a brake caliper (27), a brake carrier (28) and a bolt guide (20) comprising a bolt (21) extending along an axis (A),
- the bolt guide (20) being designed and arranged to support the brake caliper (27) in a displaceable manner along the axis (A) relative to the brake carrier (28),
- the bolt guide (20) having a sleeve (22) comprising an inner surface (23) and comprising an at least partially hollow-cylindrical portion (26),
- the sleeve (22) having a plurality of circumferential recesses (24a, 24b) on the inner surface (23), **characterized in that**
- the bolt guide (20) has a damping element (25a, 25b) arranged in each of the recesses (24a, 24b), and the damping elements (25, 25a) protruding radially inward from the recesses (24a, 24b) in the direction of the bolt 21, relative to the cylinder axis Z.

2. Braking device according to claim 1, wherein
- the recess (24a, 24b) runs along the entire circumference and/or the recess (24a, 24b) is interrupted by a butt joint (30).

3. Braking device according to either of the preceding claims, wherein
- the recess (24a, 24b) is rotationally symmetrical about a cylinder axis (Z) of the sleeve (22).

4. Braking device according to claim 1, wherein
- the damping element (25a, 25b) is ring-shaped.

5. Braking device according to claim 4, wherein
- the damping element (25a, 25b) is o-ring-shaped.

6. Braking device according to claim 1 or 2 or 3, wherein
- a plurality of the recesses (24a, 24b) each have a same width (B) and depth (T), a different width (B) to one another and/or a different depth (T) to one another.

7. Braking device according to claim 1, wherein
- the bolt guide (20) has a plurality of damping elements (25a, 25b) arranged in a relevant recess (24a, 24b), and wherein
- a plurality of the damping elements (25a, 25b) have a same dimension (R1, R2) and/or a different dimension (R1, R2) to one another.

8. Vehicle (100a), in particular a commercial vehicle (100b), comprising a braking device (10) according to any of the preceding claims.

## Revendications

1. Dispositif de freinage (10) pour un véhicule (100a), en particulier pour un véhicule utilitaire (100b), comprenant
- un étrier de frein (27), un support de frein (28) et un guide-boulon (20) comportant un boulon (21) s'étendant le long d'un axe (A), dans lequel
- le guide-boulon (20) est conçu et disposé pour soutenir l'étrier de frein (27) de manière à ce qu'il puisse coulisser le long de l'axe (A) par rapport au support de frein (28), dans lequel
- le guide-boulon (20) présente une douille (22) comportant une surface intérieure (23) et comportant une section (26) en forme de cylindre creux au moins dans certaines sections, dans lequel
- la douille (22) présente, sur la surface intérieure (23), une pluralité d'évidements (24a, 24b) s'étendant sur la circonférence, **caractérisé en ce que**
- le guide-boulon (20) présente respectivement un élément d'amortissement (25a, 25b) disposé dans les évidements (24a, 24b) et dans lequel les éléments d'amortissement (25, 25a) font saillie au-delà des évidements (24a, 24b), par rapport à l'axe de cylindre (Z), radialement vers l'intérieur en direction du boulon (21).

2. Dispositif de freinage selon la revendication 1, dans lequel
- l'évidement (24a, 24b) s'étend sur toute la circonférence et/ou l'évidement (24a, 24b) est interrompu par un joint montant (30).

3. Dispositif de freinage selon l'une des revendications précédentes, dans lequel
- l'évidement (24a, 24b) s'étend avec une symétrie de rotation autour d'un axe de cylindre (Z) de la douille (22).

4. Dispositif de freinage selon la revendication 1, dans lequel
- l'élément d'amortissement (25a, 25b) est annulaire.

5. Dispositif de freinage selon la revendication **4,** dans lequel
- l'élément d'amortissement (25a, 25b) est en forme de joint torique.

6. Dispositif de freinage selon la revendication 1 ou 2 ou 3, dans lequel
- plusieurs des évidements (24a, 24b) présentent une largeur (B) et une profondeur (T) respectivement identiques, des largeurs (B) différentes les unes des autres et/ou des profondeurs (T) différentes les unes des autres.

7. Dispositif de freinage selon la revendication 1, dans lequel
- le guide-boulon (20) présente plusieurs éléments d'amortissement (25a, 25b) disposés dans respectivement un évidement (24a, 24b), et dans lequel
- plusieurs des éléments d'amortissement (25a, 25b) présentent une même dimension (R1, R2) et/ou des dimensions (R1, R2) différentes les unes des autres.

8. Véhicule (100a), en particulier véhicule utilitaire (100b), comprenant un dispositif de freinage (10) selon l'une des revendications précédentes.
